Europäisches Patentamt

(19) European Patent Office

Office européen des brevets

(11) Publication number: **0 279 627**
**A2**

(12) # EUROPEAN PATENT APPLICATION

(21) Application number: **88301274.2**

(22) Date of filing: **16.02.88**

(51) Int. Cl.⁴: **H 04 L 11/16**
**H 04 L 1/16**

(30) Priority: **17.02.87 GB 8703616**

(43) Date of publication of application:
**24.08.88 Bulletin 88/34**

(84) Designated Contracting States:
**DE FR GB IT NL SE**

(71) Applicant: **REAL TIME DEVELOPMENTS LIMITED**
**St George's House Knoll Road**
**Camberley Surrey GU15 3SY (GB)**

(72) Inventor: **Walker, Gregory George**
**63 Cranmore Lane**
**Aldershot Hampshire (GB)**

**Burdess, Ian Richard**
**119 Malmesbury Road**
**Chippenham Wiltshire (GB)**

(74) Representative: **Beresford, Keith Denis Lewis et al**
**BERESFORD & Co. 2-5 Warwick Court High Holborn**
**London WC1R 5DJ (GB)**

(54) Communication apparatus.

(57) A local area network comprises a plurality of identical nodes connected in the form of a ring. Each node is provided with a read only memory which, in response to the clocking of the received data into ones of its address inputs, sequences through a number of states in which the received data may be reproduced at one or more of the output terminals of the ROM and control signals for the node produced at other output terminals of the ROM. When a node receives a message addressed to itself, it is adapted to transmit the received message onwards in truncated form to act as an acknowledgement message.

EP 0 279 627 A2

**Description**

COMMUNICATION APPARATUS

This invention relates to communication apparatus and is particularly concerned with such apparatus which may be used as a ring local area network.

A problem which arises in certain data communication networks, particularly ring networks, is that it is required for a receiving node to transmit an acknowledgement message back to the transmitting node to indicate receipt of a message addressed to it. In prior systems such acknowledgement messages have generally been specially assembled in the receiving node, taking up valuable microprocessor time, or have been comprised by onward transmission of the received message which, since it is relatively long, takes up valuable space on the network.

In order to solve this problem, one aspect of the invention provides a communication device for use in a communication network preferably in the form of a ring, in which an acknowledgement message is provided by truncating the received message and permitting the truncated message to continue along the transmission path for reception by the originally transmitting node.

Another aspect of the invention concerns a different problem which arises in data receiving devices, particularly but not exclusively such devices which may be connected together to form a ring system. Conventionally, such data receiving devices comprise a shift register into which the received data is clocked and control functions are carried out in dependence upon the data received in the shift register. Such control functions may be performed by software but in this case a heavy burden is based upon the microprocessor associated with the communication device, which microprocessor also has to perform a variety of other functions related to the device but independent of the received data. Relatively powerful and therefore expensive microprocessors are therefore needed in such devices. Alternatively, it is possible to provide hardwired logic which responds to the bit patterns within the receiving shift register to create the required control signals. Such logic has in the past been complex and expensive and thus there has been a trend away from the use of hardwired logic towards the use of software but, as described, this requires substantial computing power. With a view to solving these problems, an alternative aspect of the invention concerns a communication device, preferably but not exclusively for use in a ring network, in which the received data is utilised to cause different address locations in a memory to be addressed to output in sequence data stored in the addressed locations, the output data providing control signals for controlling the device. Preferably but not exlcusively the received data is applied to an address input of the memory and is reproduced at an output of the memory for transmission to other circuits in the device. Preferably the memory is a read only memory.

The invention is described further by way of example with reference to the accompanying drawing, in which:

Figure 1 illustrates a ring network in which the invention may be embodied;

Figure 2 illustrates the message structure utilised in a preferred embodiment of the invention;

Figure 3 is an outline block diagram of a node embodying the invention;

Figure 4 is a block diagram of hardware included in the node of Figure 3, constructed in accordance with a preferred embodiment of the invention;

Figure 5 is a state diagram illustrating the operation of a ROM included in the circuit of Figure 4;

Figure 6 is a block diagram showing part of the circuitry of Figure 4 in more detail; and

Figure 7 is a simplified diagram of address locations of the ROM.

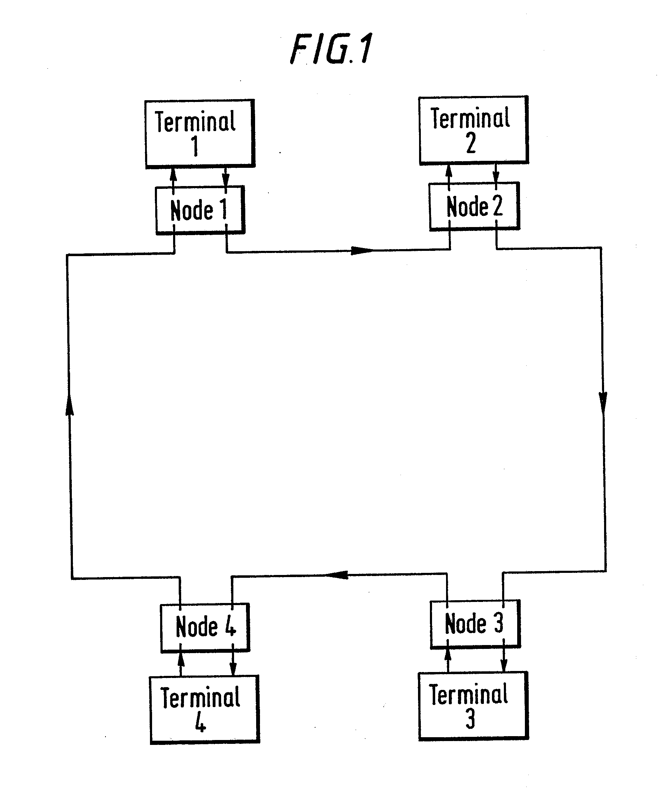

Figure 1 shows a local area network in the form of a ring made up of four identical nodes labelled as nodes 1 to 4 arranged for interconnecting four data processing devices labelled as terminals 1 to 4. With the aid of the local area network, the four terminals shown in Figure 1 may send messages to each other. The messages are transmitted in serial form from one node to the next.

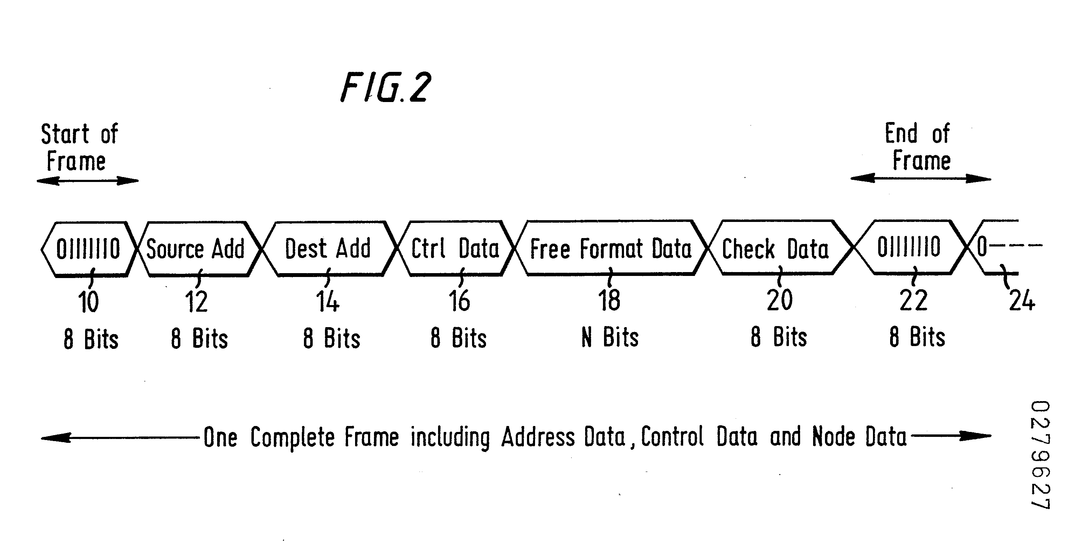

As shown in Figure 2, each message begins with a start of frame byte 10 which is followed by three bytes 12, 14, 16 representing respectively source address, destination address and control data. The control data is followed by free format data 18 which contains the information to be sent from one terminal to another and contains a variable number of bytes depending upon the amount of information being transmitted. The free format data 18 is followed by a byte 20 providing check data. The end of the message is signified by an end of message byte 22. As shown in Figure 2 at reference number 24, the next bit will be a zero and this will be true even if the end of message byte 22 is followed immediately by a new start of message byte 10 since the first bit of the start of message byte 10 is always a zero.

As seen from Figure 2, the start of message byte 10 and the end of message byte 22 are each made up of the same bit pattern 01111110.

The system is arranged so that every source address 12 begins with a "1" so that a receiving node can thereby distinguish the start of frame byte which is always followed by a "1" from an end of frame byte which is always followed by an "0". The source address 12 may comprise any bit pattern beginning with a "1". Preferably the system caters for a maximum of 120 directly addressable nodes which leaves available a number of "addresses" for special activities such as broadcast messages.

The destination address 14 may comprise any bit sequence beginning with an "0".

Thus, it will be appreciated that every node is assigned a unique destination address and a unique source address. When a node is assembling a message, it inserts in the message to be transmitted the destination address of the node for which the message is intended and its own source address. Upon receiving a message, each node examines the message to determine whether the destination address in the message matches its own destination address in which case it knows that the message is intended for itself. It may also examine the source address to determine whether it is itself the originator of the message, this facility being used for detecting acknowledgement messages.

The control data 16 may be used for a number of different purposes, for example to indicate that the message is a request by one node for a status report from another, to indicate in an acknowledgement message that the message has been safely received or that the node to which the message was addressed was unable to accept it because, for example, its storage capacity was full at the time the message arrived.

The free format data 18 should have a maximum length, such as 128 or perhaps 256 bytes, which is such that no single node can hog the entire network for a long period of time by transmitting a message containing an exceptionally large amount of information in the free format data 18.

The check data 20 is used for detection of errors which may arise from a variety of sources, such as noise, corruption of data arising from switching a node into or out of the network or loss of synchronisation.

The bit patterns in the source and destination addresses, the control data 16, free format 18 and check data 20 may all be controlled to ensure that no patterns arise which could be confused with the start of message byte 10 or end of message byte 22. Alternatively, means may be provided in each node to ensure that bit patterns similar to the start of message byte or end of message byte are not confused with these bytes when such bit patterns arise in any of the other data in the message.

In the preferred embodiment, the messages are transmitted in accordance with standard Synchronous Data Link Control (SDLC in which clock information is contained within the transmitted message for extraction and use by the receiving node.

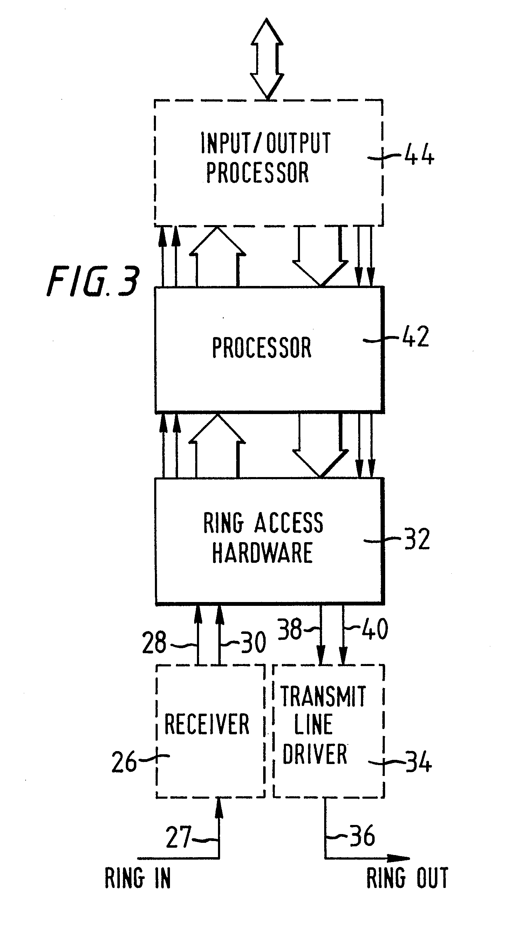

With reference to Figure 3, each node comprises a receiver 26 which receives data from the ring network via an input 27, derives clock information from the received data and outputs data on terminal 28 and clock signals on terminal 30 to ring access hardware 32. A transmitter line driver 34 receives data on terminal 38 and clock signals on terminal 40 from the ring access hardware 32 and supplies the data and clock information in the SDLC format as previously described to a terminal 36 which is connected to the ring network. A processor 42 is provided for receiving data from and transmitting data to the ring access hardware 26 and an input/output processor 44 places the processor 42 in communication with the terminal associated with the node for the transfer of data between the terminal and the node.

The ring access hardware 26 is operable in two modes. In a listener mode it checks the destination address of all incoming messages and if this matches its own destination address it both stores the received message and retransmits a truncated version of the message to act as an acknowledgement to the originator of the message. The other mode is a transmit mode. In this mode, the ring access hardware 26 checks both source and destination addresses of incoming messages. If neither matches the corresponding address of the node, the incoming message is retransmitted in unmodified form but, if necessary, with a delay whereby the retransmitted message follows the message which the node itself has transmitted. If the destination addresses match, the received message is stored and the aforementioned truncated version of the received message transmitted, if necessary with a delay. If the source address matches the source address of the node, the ring access hardware 26 recognises this as an acknowledgement from a node to which it has sent a message. When the acknowledgement message is detected, the ring access hardware is returned to the listener mode.

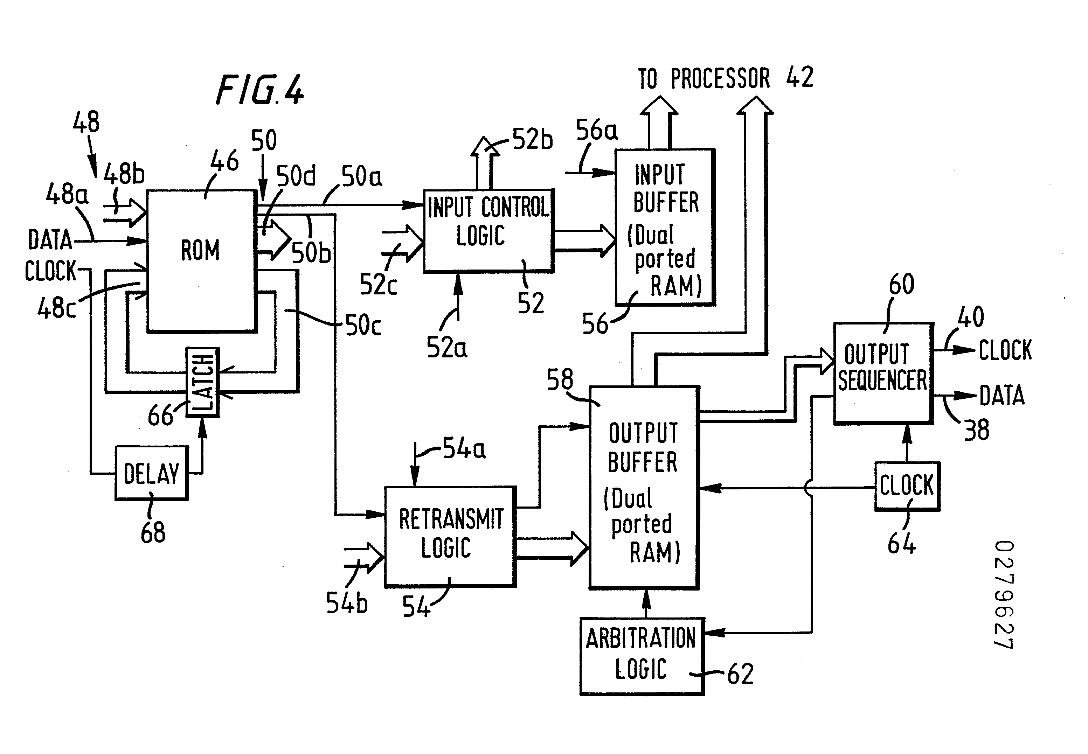

As shown in Figure 4, the ring access hardware comprises a ROM (read only memory) 46 having a pluraity of address inputs 48 and a plurality of outputs 50 and operable, in association with an input control logic circuit 52 and a retransmit logic circuit 54 to cause the ring access hardware 26 to receive and/or retransmit received data as appropriate according to the destination and source addresses in the received data and the current mode of the ring access hardware. The ROM 46 is further operable to eliminate corrupted messages.

The input control logic 52 supplies data which is to be stored in the node to an input buffer 56 from which the data may be taken by the processor 42. Data is transferred from the logic 52 to the buffer 56 in parallel form. The retransmit logic 54 supplies data which is to be retransmitted to an output buffer 58 which in turn supplies this data to an output sequencer 60. Data is transferred in parallel form from logic 54 to buffer 58 and from buffer 58 to the output sequencer 60. The output sequencer 60 supplies data in serial form to the transmit line driver 34 via the terminal 38 and also supplies clock signals thereto via the terminal 40. The output buffer 58 is also coupled to the processor 42 for receiving therefrom and storing messages to be transmitted from the associated terminal to another node. Arbitration logic 62 coupled to the output buffer 58 is operative, when more than one message is stored in the output buffer, to determine the order in which the stored messages should be supplied to the output sequencer 60. Thus, arbitration logic 62 is arranged to recognise the transmission of an end of message byte and, in response thereto, to cause the next message stored in output buffer 58 to be transmitted. Buffers 56 and 58 are preferably dual ported RAMs.

A clock 64 supplies the clock signals required by buffer 58, output sequencer 60, arbitration logic 62 and transmitter line driver 34. Input control logic 52, retransmit logic 54 and input buffer 56, however, receive clock signals on inputs 52a, 54a and 56a respectively obtained from the terminal 30 of the receiver 26 so as to be correctly timed in relation to the received data.

The received data from terminal 28 is clocked into one of the inputs 48a of the address inputs 48 of the ROM 46. A group 48b of the address inputs 48 receives status signals from output terminals 52b of the input control logic 52. A terminal in group 48b also receives a signal from processor 42 to indicate whether the hardware 26 is to operate in the listener or transmit mode. A further group 48c of the address inputs 48 of the ROM 46 receives signals from a latch 66 which is controlled by clock signals obtained from terminal 30 and supplied to the match 66 via a delay device 68 which delays the signals by a fraction of a bit period, for example by 100 nanoseconds.

The ROM 46 is provided with a first data output terminal 50a which is connected to the input control logic 52 and a second data output terminal 50b which is connected to the retransmit logic 54. The data clocked into address terminal 48a is reproduced at terminals 50a and 50b dependent upon the state of the ROM 46. A group 50d of the output terminals 50 of ROM 46 provides control signals to control signal inputs 52c of input control logic 52 and 54b of retransmit logic 54, the control signals produced being dependent upon the state of the ROM 46. A further group 50c of the output terminals 50 of ROM 46 supplies signals to the latch 66 for feeding back to the group 48c of address inputs of the ROM.

The functions performed by the ROM are achieved by causing the ROM to move in sequence through a number of states in different ones of which signals read out from memory locations in the ROM are produced on different ones of the outputs 50. Movement through the states is achieved by changing of the signals applied to the address inputs 48, this changing causing different memory locations to be addressed in sequence.

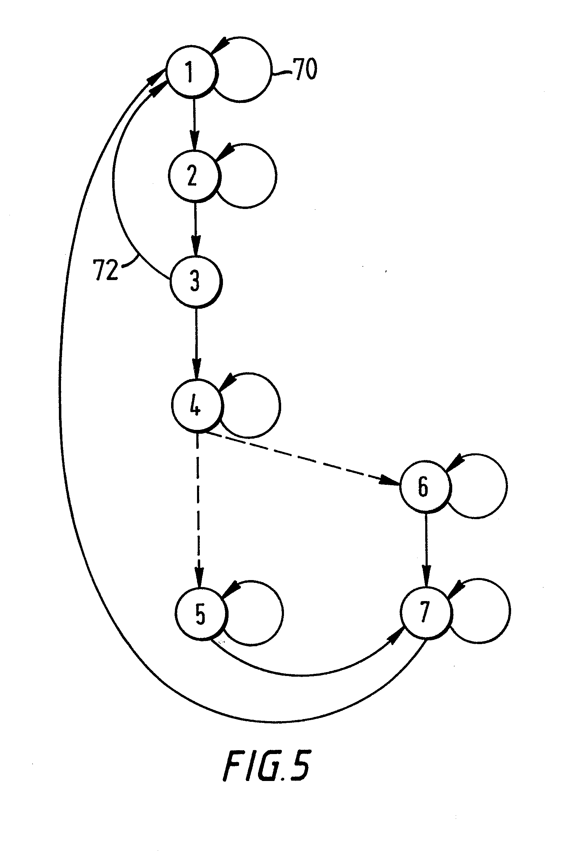

The functions performed will be understood by considering the state diagram of Figure 5. In state 1, the ROM is essentially quiescent awaiting the arrival of data on address input 48a. Every valid message includes a start of message byte as previously described having the bit pattern 01111110. In state 1, the ROM 46 awaits the arrival of such a start of message pattern. As the bit pattern arrives, the ROM counts the ones thereof. At this time all of the outputs 50 are at zero. If, during the counting of a sequence of "1"s, this sequence is interrupted by a zero before six "1"s have been counted, the ROM remains in state 1, this being indicated by the loop 70 in the drawing, and begins to count again, from the beginning, next time a "1" is received.

When a sequence of six "1"s has been counted, the ROM moves to state 2 and awaits receipt of the expected zero indicating that the start of frame bit pattern of 01111110 has been received. Following this, the ROM moves to state 3. If the next bit is zero also, this indicates that the detected bit pattern was an end of frame pattern and the ROM returns as indicated by loop 72 back to state 1. If, however, the next bit detected was a 1, this being the first bit of the source address byte, the ROM moves to state 4 in which all of the input data bits appearing at address input 48a are reproduced at both outputs 50a and 50b i.e. both the source and destination addresses are supplied in serial form to the input logic 52 and the retransmit logic 54. Whilst in state 4, control signals are supplied from outputs 50d of ROM 46 to inputs 52c of input control logic 52 to cause the input control logic 52 to compare the source and destination address bytes of the received data in turn with the source and destination addresses of the node. If the destination address in the message matches the address of the node, an appropriate status signal is output from terminal 52b of input control logic 52 and applied to one of the address inputs 46b of ROM 46 and the ROM moves to state 5. In state 5, the bits applied thereafter at clock input 48a of ROM 46 are all reproduced at output 50a but not 50b until the end of frame byte 22 followed by the first zero of byte 24 is detected. Thus, in state 5, the control data byte 16, free format bytes 18 and check data byte 20 are all supplied to the input control logic 52 which in turn passes them to input buffer 56 for storage and subsequent use. Also whilst the ROM is in state 5, the source and destination addresses which were supplied via output 50b to retransmit logic 54, are transferred from the retransmit logic 54 to the output buffer 58 and formed therein into an aknowledgement message which comprises a start of frame byte 10, the source and destination addresses 12 and 14, control data 16. and an end of frame byte 22. Since the retransmit logic 54 receives neither the start of frame byte 10 nor the end of frame byte 22 from the ROM 46, these bytes have to be recreated. For this purpose, retransmit logic 54 contains hard wired circuitry which creates a start of frame byte 10 and places it in the output buffer 58 in response to detection of the start of frame byte by the ROM 46, and creates an end of frame byte 22 and places it in the output buffer 58 following the destination and source addresses and control data, in response to a signal from ROM 46 which in turn is generated in response to detection of a match between the destination address in the message and the address of the node i.e. in response to the ROM entering state 5. This acknowledgement message is then transmitted via the output sequencer 60 and line driver 34 back onto the ring. The acknowledgement message is thus a truncated version of the received message and is retransmitted with the minimum of delay and without waiting for the whole of the received message to be stored in the node. Further, the acknowledgement message is assembled and retransmitted without intervention of the processor 42 thus leaving that processor free to deal with other matters and, since the acknowledgement message is short it takes up the minimum of ring capacity.

If, in state 5, the node recognises its own destination address in a received message but it is unable to accept the message, for example because its receive buffer 56 is full, an acknolwedgement message comprising a start of frame byte 10, source and destination addresses 12 and 14, control data 16, and an end of frame byte 22 is again transmitted in the manner described above but in this case the control data 16 is modified, by ROM 46, to indicate that although the message arrived, it could not be accepted. In those circumstances, the transmitting node may send the message again.

Further whilst in state 5, ROM 26, after receipt of the check data byte 20, will detect the pattern 01111110 of the end of frame byte 22 and will then move into state 7 in which it will wait for the next character and if this is a zero as expected, will return to state 1 to await the next message.

If, whilst the ROM is in state 4, the input control logic 52 detects no match between the destination address received, ROM 46 goes from state 4 to state 6. In state 6, the data applied to clock terminal 48 is reproduced at output terminal 50b, but not 50a, for onward transmission via the logic 54, buffer 58, within which a new start of frame byte 10 is added by retransmit logic 54 at the head of the message, sequencer 60 and driver 34. ROM 46 remains in state 6 until the end of message byte 22 is detected and thereafter moves to state 7 from which, as previously described, it returns to state 1 after detection of the next zero. The end of message byte 22 which is transmitted at this time may be supplied from the ROM 46 or created by the retransmit logic 54 in a manner similar to that described in relation to the acknowledgement message.

In describing Figure 5, it has been assumed that the node is in the listener mode. If it is in the transmit mode, and a message is received in which neither of the destination and source addresses matches those of the node, the ROM moves through states 1 to 4, 6 and 7 and back to state 1 as described above. However, if the node has not completed transmission of the message which it is sending, the received message will be queued in the output buffer behind the message being transmitted. The output buffer preferably has enough storage for queuing of a number of messages as may be required when there is heavy traffic in the ring.

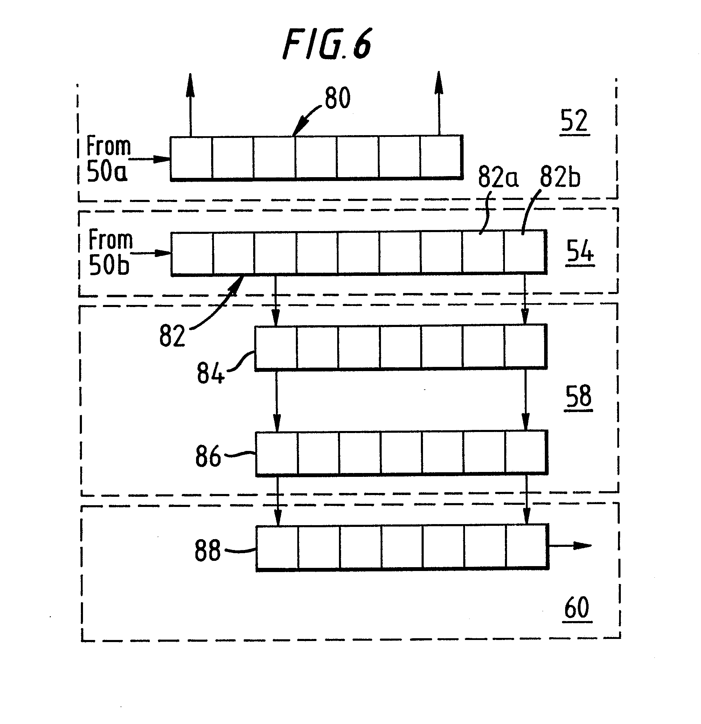

If the node is in the transmit mode and a message is received whose source address corresponds to the source address of the node, the input control logic immediately supplies a signal to an appropriate one of the inputs 48b to cause the ROM to enter a state in which the retransmit logic 54 is supplied with a signal which prevents transfer of any further data from the logic 54 to the output buffer 58. The timing of these operations will be further understood by reference to Figure 6. This drawing shows an eight bit shift register 80 which is included in the input control logic 54 and which receives serially the data supplied from terminal 50a. A ten bit shift register 82 is included in the retransmit logic 54 to receive data from the terminal 50b serial form. A storage location 84 in buffer 58 receives data from the shift register 82, a storage location 86 in the buffer 58 receives the data from storage location 84 and a shift register 88 included in the output sequencer 60 receives the data from the storage location 86. Data is transferred from shift register 82 to shift register 88 via the storage locations 84 and 86 is in parallel form. Data is transferred out of the shift register 88 is in serial form. It will be appreciated from Figure 6 that when the eights bits of the source address have entered the shift register 80, the eight bits of the source address will also have entered the first eight bit positions of shift register 82 while the remaining two bit positions 82a and 82b will be vacant. Transfer of data from the shift register 82 to the storage location 84 does not take place until the data in shift register 82 has reached the right hand end of that shift register as seen in Figure 6. Thus there is a time of two bit periods after the source address has fully entered the shift register 80 and before the source address will be transferred from shift register 82 to storage location 84. Within this time, the transmit logic 54 is put, by an appropriate control signal, into a condition in which such transfer is prevented when input control logic 52 detects a match between the received source address and the source address of the node. Nevertheless, before this takes place, the new start of the message byte placed in the output buffer 58 will have been transferred to the output sequencer 60 and accordingly will have had most of its bits transmitted on to the network before the match between source addresses is detected. This start of message byte will accordingly be sent on to the next node in the ring but since it will not be followed by a source address beginning with a binary 1, the following node will treat it as corrupted data and remove it from the ring.

As already explained, the clock 64 shown in Figure 4 controls the circuits handling the output of data from the ring access hardware 32 whereas clock signals derived from the received data control the circuits into which the received data is read. The arrangement shown in Figure 6 provides a means for accommodating synchronisation errors between these two sets of clock signals. The circuitry shown in Figure 6 is arranged so that immediately shift register 88 becomes empty following reading out of a byte therefrom, any data in location 86 is transferred to shift register 88 and any data in location 84 is transferred into location 86 immediately that location becomes vacant. Data received by shift register 82 is only transferred to location 84 after it has reached the right hand end of shift register 82 as previously mentioned. In this way, clocking of data into shift register 82 is independent of clocking of data out of shift register 88. The degree of lack of synchronism between the two sets of clock signals which can be tolerated is dependent upon the number of storage locations in buffer 58 through which the data is transferred from shift register 82 to shift register 88.

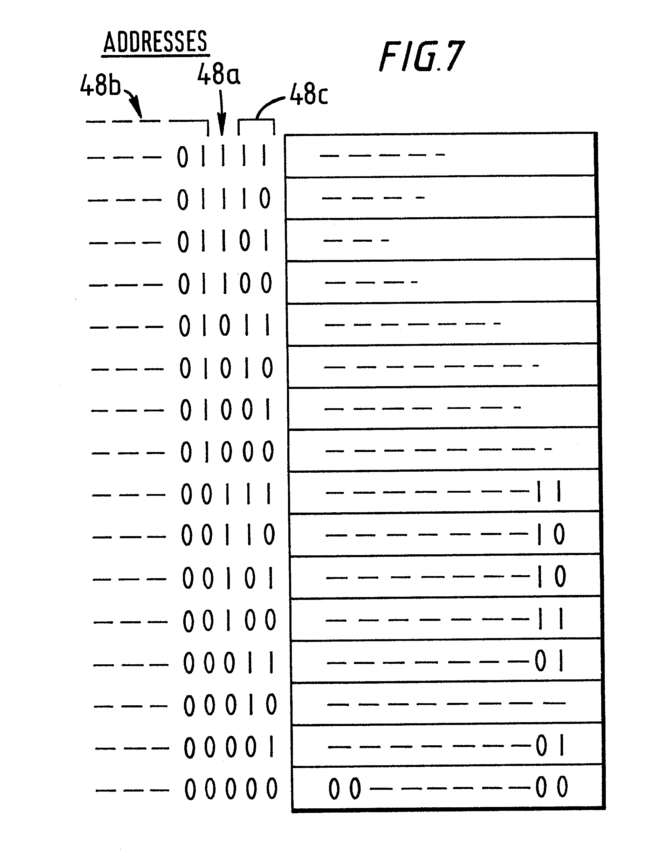

The way in which the ROM 46 changes between its various states will now be described with reference to Figure 7 which indicates diagrammatically at 80 a number of the address locations of the ROM. Each of these locations is identified by a unique address and, in the example shown in Figure 7, these are the addresses ---00000 to ---01111. For the purpose of explanation, it will be assumed that the two least significant bits of each of the address numbers correspond to the address inputs of the group 48c. It should be understood, however, that although for the purpose of a simplified explanation it is assumed that there are only two inputs in this group, in practice there will be substantially more. It will further be assumed that the next most significant bit of the address number corresponds to the terminal 48a of the ROM 46 to which the data is clocked. The bits of higher significance in the addresses shown in Figure 6 correspond to the inputs 48a.

Assuming initially that the ROM is in the quiescent state and no messages are arriving at the node all of the address inputs 48 are at zero and thus location ---0000 in Figure 7 is addressed. This location itself contains all zeros so that all outputs 50 are at zero.

At some time the first binary 1 of a start of message byte will arrive so that location ---0100 will be addressed. As shown in Figure 7, the two least significant bits of the data stored in this address location are 11 which are thus output at terminals 50c These bits 11 are consequently applied to the latch 66 which, upon occurrence of the delayed clock pulse output by delay circuit 68, are then applied by the latch 66 to the inputs 48c thus again to change the input address from ---0100 to ---0111. Location ---0111 is thus addressed. This also has the bits 11 in its least significant bit positions so that the bits 11 continue to be applied to the input of the latch. Thus, at this point, the ROM remains in state 1 and has counted the first of the six ones contained in the start of message byte.

The manner of clocking the data to address input 48a of ROM 46 is such that between each successive pair of binary ones, the voltage level on input 48a changes to that which represents binary 0. Consequently, when this change arises the address input changes from ---0111 to ---0011. In this location, as shown in Figure 7, the two least significant bits are 01 rather than 11 so that when this 01 is latched to the inputs 48c upon occurrence of the delayed clock signal from delay device 68, the address input changes from ---0011 to ---0001. As shown in the drawing location ---0001 also contains 01 in its least significant bit positions so that the address input becomes stable in the condition ---0001. It will be now be apparent that each time the voltage level applied to address input terminal 48a changes from that representing 0 to that representing 1 or _vice versa_ two address changes take place. Upon the occurrence of the second binary 1 in the start of message byte, the address input changes from ---0001 to ---0101. The last two bits in this address location are 10 so that when these are latched to the address inputs, location ---00110 is addressed. In this location, the last two bits also are 10 so that this location continues to be addressed. Thus, the second "1" has been counted. This process continues in this way a succession of different address locations are addressed as the six binary ones of the start of frame byte arrive, and these binary ones are effectively counted. During this counting, the outputs 50a, 50b and 50d of ROM 46 all remain at zero.

After the completion of the counting of the six binary ones and of the final 0 in the sequence 01111110 the address locations which are addressed in sequence are such as to reproduce at terminals 50a and 50b the data which appears at terminal 48a. In this way the data is reproduced and supplied to the input control logic 52 and the retransmission logic 54, the ROM having moved from state 1 through state 2 and state 3 and into state 4. It will now be understood how, with continuing receipt of data, appropriate locations in the ROM are addressed to output the signals required at each of the outputs 50 to achieve the functions previously described in relation to Figures 4, 5 and 6. The use of a ROM in this way to produce the required sequence of control signals and reproduce the received data for application to the input control logic and retransmit logic as required provides the substantial advantage that these relatively complex control functions are all effected by simple and inexpensive hardware without placing any burden whatsoever upon the processor 42 which is accordingly completely free to deal with other tasks. Desirably the node source and destination addresses are generated by the processor 42, to provide for simplicity of manufacture, but even in this case these addresses can be stored in a register at start-up and address detection thereafter carried out by the application of control signals from the outputs 50b to the input control logic 52 rather than utilising processor time for carrying out these comparisons.

Various modifications are possible within the scope of the invention. For example although in the embodiment the detection by the ring access hardware of a match between its own source address and the received source address results in an operation which permits a start of message bit pattern to be transmitted onto the next node where it is eliminated, means could be provided whereby transmission of that bit pattern is also prevented. Such means might comprise the inclusion of an additional delay means, such as a sixteen bit shift register, in the retransmit logic 54a arranged so that a comparison of the source addresses can be carried out before having to begin transmission of the new start of message bit pattern.

Although in the embodiment illustrated clock information is combined with the transmitted data in SDLC format, an alternative possibility would be to provide clock information from the transmitting portion of one node to the receiving portion of the next node by a link which is separate from the link carrying the data. Further, different forms of timing operations and means may be provided instead of those illustrated in the drawings for providing the required level of synchronism between or within the nodes or, alternatively asynchronous transmission of data could be employed.

The aspect of the invention according to which a truncated version of the received message is retransmitted for use as an acknowledgement message, may be applied in a variety of different types of node. For example, although this has been illustrated, in the preferred embodiment in connection with a node utilising ROM 46 for receiving the incoming data, this aspect of the invention may be applied to a variety of different forms of node, such as nodes having a more conventional form of input circuitry instead of the ROM 46, for example a simple input register such as a shift register together with associated hardwired logic or software. This aspect of the invention provides exceptional advantages in ring networks whose capacity is necessarily limited.

Further, the aspect of the invention according to which the input data is applied to a memory (such as ROM 46) may be applied to nodes utilising circuitry substantially different from that shown in Fig. 4. Also, the memory may take various different forms. Instead of a read only memory 46, a random access memory might be used in certain circumstances in which the various address locations would be loaded with appropriate data at start-up, whereafter operation may be similar to that described with reference to ROM 46.

Although the invention has so far been described in apparatus terms, the invention also resides in a method of data communication.

Thus, in a further aspect, the invention provides a method of communication in a data network, preferably a ring network, having a plurality of interconnected stations, comprising:

causing a first station in said network to transmit a message including destination and source address data and information to be transmitted;

causing other stations in said network to receive said message and to check the destination and source address data in the message;

causing that station whose address matches said destination address to truncate said message to form an acknowledgement message containing at least said source address and to transmit said acknowledgement message; and

causing said first station to receive said acknowledgement message and upon recognition of a match between its own address and the source address in said acknowledgement message to perform a predetermined function.

In yet a further aspect, the invention provides a method of data communication comprising:

providing a plurality of stations interconnected to form a network and each including a memory having a plurality of address inputs, a plurality of address locations and a plurality of outputs at which signals stored in said locations are reproduced selectively in response to addressing of said locations;

causing a said station to transmit a message including destination and source address data to at least one other of said stations;

applying said message at said at least one other station to an address terminal of said memory thereof to cause a succession of said address locations thereof to be addressed as a consequence of the arrival at said address terminal of successive portions of said message; and

utilising signals output by said memory in response to addressing of said successive locations to effect a control function in said at least one other station.

## Claims

1. A communication device adapted for connection in a network with a plurality of similar devices, comprising:
   means for defining an address of the device;
   means for transmitting messages including destination and source address data;
   means for receiving said messages;
   means for detecting said destination address data and said source address data in received messages; and
   means responsive to detection of a match between the defined address of the device and the destination address data in the received message to retransmit said received message in truncated form, said retransmitted received message in truncated form acting as an acknowledgement message.

2. A device according to claim 1, including means to provide in said acknowledgement message data signifying that the received message has been accepted by said device.

3. A device according to claim 1, including means to provide in said acknowledgement message data signifying that the received message arrived at said device but could not be accepted thereby.

4. A device according to claim 1, including means for performing a control function in response to detection of a match between the defined address of the device and the source address in a received message, said control function resulting in said received message being removed from the network.

5. A device according to claim 4, wherein said control function results in said received message being removed from the network at the next succeeding device in the network.

6. A device according to claim 4, wherein the control function is such that the received message is removed from the network without being transmitted to the next successive device in the network.

7. A device according to claim 1, including receiving circuitry for receiving said messages from an upstream device in the network, input means for receiving from said receiving circuitry messages intended for the device, retransmission means for receiving from the receiving circuitry messages intended for retransmission, and means to cause a leading portion of a message received by said receiving circuitry to be supplied simultaneously to said input means and said retransmission means, said leading portion including said address data.

8. A device according to claim 7, wherein said messages include start of message data and end of message data and wherein said receiving circuitry is operable to remove said start of message data from received messages and said retransmission means is operable to create new start of message data at the head of messages retransmitted thereby.

9. A device according to claim 8, wherein said retransmission means is operable to create end of message data at the end of said acknowledgement messages.

10. Apparatus according to claim 7, including means to terminate supply of said messages to said retransmission means in response to detection of a match between the destination address data in the message and the defined address of the device, and means to terminate supply of the received message to the input means in response to detection of no match between said destination address data and the defined address of the device.

11. A communication network comprising a plurality of devices according to claim 1 interconnected with each other in the form of a ring such that messages may be transmitted around said ring.

12. Data receiving apparatus comprising circuit means for receiving data and control means for controlling said circuit means, said control means comprising a memory having a plurality of address inputs and a plurality of signal outputs, a first of said address inputs being arranged to receive said data and said memory being arranged to assume a plurality of states in sequence in response to changing data applied to said first address input, for supplying from said outputs control signals for said data receiving circuitry.

13. Apparatus according to claim 12, wherein said memory is arranged so that in at least one of said states said data applied to said first address terminal is reproduced at at least one of said output terminals.

14. Apparatus according to claim 12, wherein said memory is arranged so that in at least one of said states said data applied to said first address terminal is reproduced at at least two of said output terminals for supply to respective different portions of said circuit means.

15. Apparatus according to claim 12, wherein said memory is arranged so that said data applied to said first address terminal may be reproduced at first and second said output terminals, in a first said state said data being reproduced at only said first output terminal, in a second said state said data being reproduced at said first and at said second output terminal, and in a third said state said data being reproduced only at said second output terminal.

16. Apparatus according to claim 12, wherein said memory is a read only memory.

17. Apparatus according to claim 12, including means to feedback to predetermined ones of said address inputs, data produced at predetermined ones of said signal outputs.

18. Apparatus according to claim 12, wherein said feedback means comprises a latch.

19. Apparatus according to claim 12, arranged so that, upon application of each new bit to said first address terminal, at least two address locations are addressed in sequence.

20. Apparatus according to claim 12, in combination with a plurality of other similar apparatus connected in a ring to form a communication network.

0279627

# FIG.1

# FIG.2

Start of
Frame ⟷

End of
Frame ⟷

⟨ 01111110 ⟩⟨ Source Add ⟩⟨ Dest Add ⟩⟨ Ctrl Data ⟩⟨ Free Format Data ⟩⟨ Check Data ⟩⟨ 01111110 ⟩⟨ 0 — — —

| 10 | 12 | 14 | 16 | 18 | 20 | 22 | 24 |
|---|---|---|---|---|---|---|---|
| 8 Bits | 8 Bits | 8 Bits | 8 Bits | N Bits | 8 Bits | 8 Bits | |

⟵ One Complete Frame including Address Data, Control Data and Node Data ⟶

0279627

FIG.3

*FIG.4*

FIG.5

## FIG.6

## ADDRESSES

## FIG.7

| 48b | 48a | 48c | |
|---|---|---|---|
| — — — | 0 1 1 1 1 | — — — — — | |
| — — — | 0 1 1 1 0 | — — — — — | |
| — — — | 0 1 1 0 1 | — — — — | |
| — — — | 0 1 1 0 0 | — — — — — | |
| — — — | 0 1 0 1 1 | — — — — — — — — | |
| — — — | 0 1 0 1 0 | — — — — — — — — — | |
| — — — | 0 1 0 0 1 | — — — — — — — — | |
| — — — | 0 1 0 0 0 | — — — — — — — — — | |
| — — — | 0 0 1 1 1 | — — — — — — — 1 1 | |
| — — — | 0 0 1 1 0 | — — — — — — — 1 0 | |
| — — — | 0 0 1 0 1 | — — — — — — — 1 0 | |
| — — — | 0 0 1 0 0 | — — — — — — — 1 1 | |
| — — — | 0 0 0 1 1 | — — — — — — — 0 1 | |
| — — — | 0 0 0 1 0 | — — — — — — — — | |
| — — — | 0 0 0 0 1 | — — — — — — — 0 1 | |
| — — — | 0 0 0 0 0 | 0 0 — — — — — — 0 0 | |